# EUROPÄISCHE PATENTSCHRIFT

(11) **EP 4 222 725 B1**
(45) Veröffentlichungstag und Bekanntmachung des Hinweises auf die Patenterteilung: **05.11.2025**
(21) Anmeldenummer: 21786381.0
(22) Anmeldetag: 29.09.2021
(51) Int. Cl.: G08G 1/01, G08G 1/0967, G08G 1/04, G06V 20/58, G08G 1/065

(54) **VERFAHREN ZUM ERZEUGEN EINER FREIGABE FÜR EINE NUTZUNG EINES SEITENSTREIFENS MITTELS EINES ÜBERWACHUNGSSYSTEMS, SOWIE ÜBERWACHUNGSSYSTEM**
METHOD FOR PROVIDING CLEARANCE FOR THE USE OF A HARD SHOULDER BY MEANS OF A MONITORING SYSTEM, AND MONITORING SYSTEM
PROCÉDÉ POUR FOURNIR UN DÉGAGEMENT POUR L'UTILISATION D'UNE BANDE D'ARRÊT D'URGENCE AU MOYEN D'UN SYSTÈME DE SURVEILLANCE, ET SYSTÈME DE SURVEILLANCE

(30) Priorität: 02.10.2020 DE 102020006036
(43) Veröffentlichungstag der Anmeldung: 09.08.2023
(73) Patentinhaber: Mercedes-Benz Group AG, 70372 Stuttgart (DE)
(72) Erfinder: BOROWSKI, Tim, 33602 Bielefeld (DE)
(74) Vertreter: Novagraaf Group
(86) Internationale Anmeldenummer: PCT/EP2021/076799
(87) Internationale Veröffentlichungsnummer: WO 2022/069546

(56) Entgegenhaltungen:
- EP-A1- 2 849 165
- DE-A1- 102008 019 375
- DE-A1- 102016 221 574
- US-B2- 9 430 944

## Beschreibung

Die Erfindung betrifft ein Verfahren zum Erzeugen einer Freigabe für eine Nutzung eines Seitenstreifens einer Straße für Kraftfahrzeuge mittels eines Überwachungssystems. Ferner betrifft die Erfindung ein Überwachungssystem.

Aus dem Stand der Technik ist bekannt, dass bei hohem Verkehrsaufkommen auf spezifischen Streckenabschnitten von beispielsweise Autobahnen der Seitenstreifen dynamisch freigegeben werden kann, um den Verkehr auf mehr Spuren zu verteilen. Bei einer Freigabe wird nach einem definierten Schema vorgegangen beispielsweise wird der Seitenstreifen auf potentiell liegen gebliebenen Kraftfahrzeuge, Gegenstände oder weiteren Objekten untersucht. Dazu werden stationäre Sensoren wie Induktionsschleifen, schwenkbare Kameras und Radar beziehungsweise Laser eingesetzt. Eine finale Freigabe des Seitenstreifens erfolgt dann manuell durch einen Operator des Überwachungssystems, der insbesondere die Bilder betrachtet, welche über die Erfassungseinrichtungen entsprechend übertragen werden können.

Die DE 10 2016 211 751 A1 offenbart ein Verfahren zum Bestimmen und/oder Auswerten eines Zustands zumindest eines fahrbaren Randobjekts. Das Verfahren zum Bestimmen eines Zustands von zumindest einem fahrbaren Randobjekt umfasst das Erfassen von optischen Sensordaten. Die Sensordaten betreffen das zumindest eine Fahrbahnrandobjekt. Das Verfahren umfasst ferner Bereitstellen von Informationen über den Zustand des zumindest einen Fahrbahnrandobjekts für eine Zentralstelle basierend auf den aufgenommenen optischen Sensordaten.

Weiterhin zeigt der Artikel "AUTO.DE/(ZWI/MID): Autobahnverkehr: Seitenstreifen befahren. Online-Artikel vom 15.01.2013. URL: https://www.auto.de/magazin/autobahnverkehr-seitenstreifen- befahren/ (abgerufen am 20.05.2021)" ein Verfahren, wie mittels stationärer Kameras und einer zusätzlichen Kontrolle durch Streckenfahrzeuge der Zustand eines Seitenstreifens erfasst wird und dieser entsprechend freigegeben wird.

Aus der DE 10 2008 019 375 A1 ist ein Detektorsystem zur Ermittlung des Belegungsstatus eines Seitenstreifens bekannt, welches eine im Bereich des Seitenstreifens angebrachte Messsensorik aufweist, die auf einer Messung von elektrischen und/oder magnetischen Feldern basiert.

Weiterhin zeigt die GB 2 408 372 A ein System sowie ein Verfahren zur Ermittlung der Präsenz eines Fahrzeugs auf einer Fahrbahn mithilfe von induktiven Messschleifen in oder auf der Fahrbahn.

Aufgabe der vorliegenden Erfindung ist es, ein Verfahren sowie ein Überwachungssystem zu schaffen, mittels welchem automatisiert die Freigabe eines Seitenstreifens erzeugt werden kann.

Diese Aufgabe wird durch ein Verfahren sowie durch ein Überwachungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen einer Freigabe für eine Nutzung eines Seitenstreifens einer Straße für Kraftfahrzeuge mittels eines Überwachungssystems, bei welchem mittels zumindest einer Erfassungseinrichtung in Form einer Kamera oder eines Radar-, Lidar- oder Ultraschallsensors der Seitenstreifen erfasst wird und in Abhängigkeit von der Erfassung ein Belegungszustand des Seitenstreifens ermittelt wird und in Abhängigkeit von dem Belegungszustand und in Abhängigkeit von einem Entscheidungskriterium die Freigabe zur Nutzung des Seitenstreifens mittels einer kraftfahrzeugexternen, zentralen elektronischen Recheneinrichtung des Überwachungssystems erzeugt wird.

Es ist vorgesehen, dass mittels einer Erfassungseinrichtung einer Vielzahl von Kraftfahrzeugen, welche auf der Straße fahren, der Seitenstreifen erfasst wird und der erfasste Seitenstreifen zur Auswertung an die zentrale elektronische Recheneinrichtung übertragen wird und der Belegungszustand bezüglich zumindest eines dynamischen Objekts auf dem Seitenstreifen ermittelt wird.

Dadurch ist es ermöglicht, dass eine Automatisierung, insbesondere ohne den Eingriff eines Operators am Überwachungssystem, für die Freigabe des Seitenstreifens erfolgen kann. Insbesondere sind somit keine Sensoren wie beispielsweise Kameras, Radar, Laser und Induktionsschleifen zur Überwachung des Seitenstreifens auf einem extra System erforderlich. Somit entfällt auch eine kostenintensive Wartung dieser entsprechenden Sensoren. Es muss keine manuelle Freigabe durch den Operator durchgeführt werden, der die Daten manuell betrachtet, und die Freigabe erwirkt. Ferner ist das Überwachungssystem fehlerunanfällig, da nicht mehr manuell detektiert und freigegeben wird beziehungsweise schnell die Änderungen aufgenommen und entsprechend darauf reagiert werden kann.

Unter dem dynamischen Objekt ist vorliegend insbesondere ein liegengebliebenes oder stehengebliebenes Kraftfahrzeug, oder ein sich bewegendes Objekt zu verstehen. Insbesondere handelt es sich somit um Objekte, welche nicht dauerhaft am Seitenstreifen verweilen. Es handelt sich somit insbesondere nicht um Objekte, die eine Beschädigung des Seitenstreifens oder eine Leitplanke betreffen.

Insbesondere betrifft somit das vorgeschlagene Verfahren eine Freigabe für den Seitenstreifen. Es werden dabei die Sensordaten von Kraftfahrzeugen auf dem Fahrstreifen genutzt. Es erfolgt eine Fusionierung der Daten mehrerer Kraftfahrzeuge auf derselben Strecke auf der kraftfahrzeugexternen, zentralen elektronischen Recheneinrichtung, welche auch als Backend bezeichnet werden kann. Es erfolgt dann ferner eine automatisierte Entscheidung über die Freigabe anhand der fusionierten Daten.

Es wird somit ermittelt, ob das dynamische Objekt auf dem Standstreifen steht, sodass eine manuelle Bewertung des Seitenstreifens über entsprechende Sensoren vermieden ist, wobei dann wiederum dieser Seitenstreifen automatisiert freigegeben werden kann. Diese Information wird dann wiederum eine Funktionseinheit auf der Straße, beispielsweise über ein Car-to-X oder eine andere Kommunikationskette an die entsprechenden Verkehrsteilnehmer geschickt.

Bei dem Verfahren handelt es sich insbesondere um ein computerimplementiertes Verfahren.

Insbesondere, sollte es sich beispielsweise bei den entsprechenden Kraftfahrzeugen um sogenannte teilweise autonome Kraftfahrzeuge handeln, so kann mit einer Vielzahl von Erfassungseinrichtungen der Seitenstreifen überwacht werden. Hierzu können dann von den unterschiedlichen Erfassungseinrichtungen eines einzigen Kraftfahrzeugs diese Informationen an die kraftfahrzeugexterne elektronische Recheneinrichtung übertragen werden. Von den weiteren Kraftfahrzeugen können dann ebenfalls die entsprechenden Informationen übertragen werden. In der kraftfahrzeugexternen, zentralen elektronischen Recheneinrichtung erfolgt dann eine Fusionierung dieser Daten und eine entsprechende Auswertung des Belegungszustands. Somit kann beispielsweise verhindert werden, dass ein einziges Kraftfahrzeug beispielsweise aufgrund einer Sonnenblendung oder aufgrund einer Verschattung entsprechend das dynamische Objekt nicht erfassen kann, eine falsche Freigabe erfolgt. Durch die weiteren Erfassungseinrichtungen der weiteren Kraftfahrzeuge kann somit eine Verifikation des Belegungszustands durchgeführt werden.

Weiterhin vorteilhaft ist, mittels der Vielzahl von Erfassungseinrichtungen, der Mittel des Belegungszustands mittels der zentralen elektronischen Recheneinrichtung verifiziert wird. Somit kann insbesondere in Echtzeit auf Veränderungen reagiert werden. Sollte beispielsweise aus einer Nichtfreigabe eine Freigabe des Seitenstreifens erfolgen. Ferner können Fehlermittlungen des Belegungszustands verifiziert und ausgeglichen werden.

In einer weiteren vorteilhaften Ausgestaltungsform wird ein aktuelles Verkehrsaufkommen als Entscheidungskriterium bei der Freigabe des Seitenstreifens berücksichtigt. Sollte ein hohes Verkehrsaufkommen auf der Straße erfasst werden, so kann die Freigabe des Seitenstreifens erfolgen. Sollte jedoch ein geringes Verkehrsaufkommen zu verzeichnen sein, so kann trotz eines freien Belegungszustands des Seitenstreifens dieser dennoch für ein Befahren geschlossen bleiben, da dies zum einen nicht notwendig ist und zum anderen die Sicherheit erhöht werden kann, sodass der Seitenstreifen beispielsweise für zukünftige Liegenbleiber freigehalten werden kann.

Ebenfalls vorteilhaft ist, wenn der Seitenstreifen für einen vorgegebenen Abschnitt des Seitenstreifens und/oder für eine vorgegebene Zeit mittels der zumindest einen Erfassungseinrichtung erfasst wird. Insbesondere kann der vorgegebene Abschnitt lediglich die Abschnitte des Seitenstreifens umfassen, welche auch für ein dynamisches Freigeben ausgebildet sind. Ferner kann nur für eine vorgegebene Zeit, beispielsweise bei hohem Verkehrsaufkommen, beziehungsweise wenn das hohe Verkehrsaufkommen identifiziert wird, die entsprechende Erfassung durchgeführt beziehungsweise eine Auswertung durchgeführt werden.

Weiterhin vorteilhaft ist, wenn die Freigabe des Seitenstreifens automatisiert an ein Verkehrsleitsystem des Überwachungssystems übertragen wird. Beispielsweise kann mittels des Überwachungssystems die Freigabe erfolgen und dann automatisiert, beispielsweise über Car-to-X oder über weitere Kommunikationsmöglichkeiten an das Verkehrsleitsystem übertragen werden. Das Verkehrsleitsystem kann dann insbesondere eine Anzeige aufweisen, welche einem Kraftfahrzeug auf der Straße anzeigt, dass der Seitenstreifen genutzt werden kann. Dies kann beispielsweise über entsprechende optische Symbole durchgeführt werden.

In einer weiteren vorteilhaften Ausgestaltungsform wird in Abhängigkeit von der Erfassung des Seitenstreifens eine Vertrauensgüte für den Belegungszustand mittels der zentralen elektronischen Recheneinrichtung erzeugt und in Abhängigkeit von der Vertrauensgüte die Freigabe mittels der zentralen elektronischen Recheneinrichtung erzeugt. Insbesondere wird so überprüft, ob tatsächlich von beispielsweise einer vorgeschriebenen Anzahl von Erfassungseinrichtungen die Information bezüglich des Belegungszustands erfasst werden kann. Sollte beispielsweise dies nicht der Fall sein, so kann die Vertrauensgüte zu diesem Abschnitt entsprechend niedrig sein, sodass es zu keiner Freigabe des Seitenstreifens kommt. Sollte die Vertrauensgüte entsprechend hoch sein, so kann eine Freigabe erfolgen.

Ebenfalls vorteilhaft ist, wenn mittels einer Bilderkennung innerhalb der zentralen elektronischen Recheneinrichtung der Belegungszustand des Seitenstreifens ermittelt wird. Beispielsweise kann dann eine Erfassungseinrichtung des Kraftfahrzeugs, die hier als Kamera ausgebildet ist, entsprechende Bilder an die zentrale elektronische Recheneinrichtung übertragen. Insbesondere kann von einer Vielzahl von Kraftfahrzeugen dann eine Vielzahl von Bildern an die elektronische Recheneinrichtung übertragen werden. Diese können dann beispielsweise fusioniert werden, sodass beispielsweise auch Blendungen oder Schmutz in einzelnen Kamerabildern dennoch zuverlässig zur Auswertung herangezogen werden können. Somit können Fehlfreigaben verhindert werden.

Weiterhin vorteilhaft ist, wenn die Erzeugung der Freigabe in Echtzeit durchgeführt wird. Insbesondere wird somit nach einem Erfassen des Seitenstreifens dieser in Echtzeit an die zentrale elektronische Recheneinrichtung übertragen, wobei diese wiederum in Echtzeit eine Auswertung über den Belegungszustand durchführt. Sollte dann der Belegungszustand eine Freigabe des Seitenstreifens zulassen, so kann die Freigabe direkt, insbesondere ohne wesentlichen Zeitverzug, im Anschluss erfolgen, sodass auf Änderungen entsprechend schnell reagiert werden kann.

Ein weiterer Aspekt der Erfindung betrifft ein Computerprogrammprodukt mit Programmbefehlen, welche bewirken, wenn das Computerprogrammprodukt auf der kraftfahrzeugexternen, zentralen elektronischen Recheneinrichtung durchgeführt wird, ein Verfahren nach dem vorhergehenden Aspekt durchzuführen. Das Computerprogrammprodukt kann insbesondere auf einem computerlesbaren Speichermedium der kraftfahrzeugexternen, zentralen elektronischen Recheneinrichtung abgespeichert sein.

Ein nochmals weiterer Aspekt der Erfindung betrifft ein Überwachungssystem zum Erzeugen einer Freigabe für eine Nutzung eines Seitenstreifens einer Straße für Kraftfahrzeuge, mit zumindest einer Kraftfahrzeugexternen, zentralen elektronischen Recheneinrichtung, wobei das Überwachungssystem zum Durchführen eines Verfahrens nach dem vorhergehenden Aspekt ausgebildet ist. Insbesondere wird das Verfahren mittels des Überwachungssystems durchgeführt.

Vorteilhafte Ausgestaltungsformen des Verfahrens sind als vorteilhafte Ausgestaltungsformen des Computerprogrammprodukts, des computerlesbaren Speichermediums sowie des Überwachungssystems anzusehen. Das Überwachungssystem weist dazu gegenständliche Merkmale auf, welche zur Durchführung eines Verfahrens oder einer vorteilhaften Ausgestaltungsform davon notwendig sind.

Weitere Vorteile, Merkmale und Einzelheiten der Erfindung ergeben sich aus der nachfolgenden Beschreibung bevorzugter Ausführungsbeispiele sowie anhand der Zeichnungen. Die vorher schon in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur jeweils angegebene Kombinationen, sondern auch in anderen Kombinationen oder in Alleinstellung verwendbar, ohne den Rahmen der Erfindung zu verlassen.

Dabei zeigen:
- Fig. 1: eine schematische Seitenansicht einer Ausführungsform eines Überwachungssystems;
- Fig.2: eine schematische Perspektivansicht einer Ausführungsform eines Überwachungssystems; und
- Fig. 3: eine schematische Ansicht zur Auswertung des Belegungszustands gemäß Fig. 2.

In den Figuren sind gleiche oder funktionsgleiche Elemente mit den gleichen Bezugszeichen versehen.

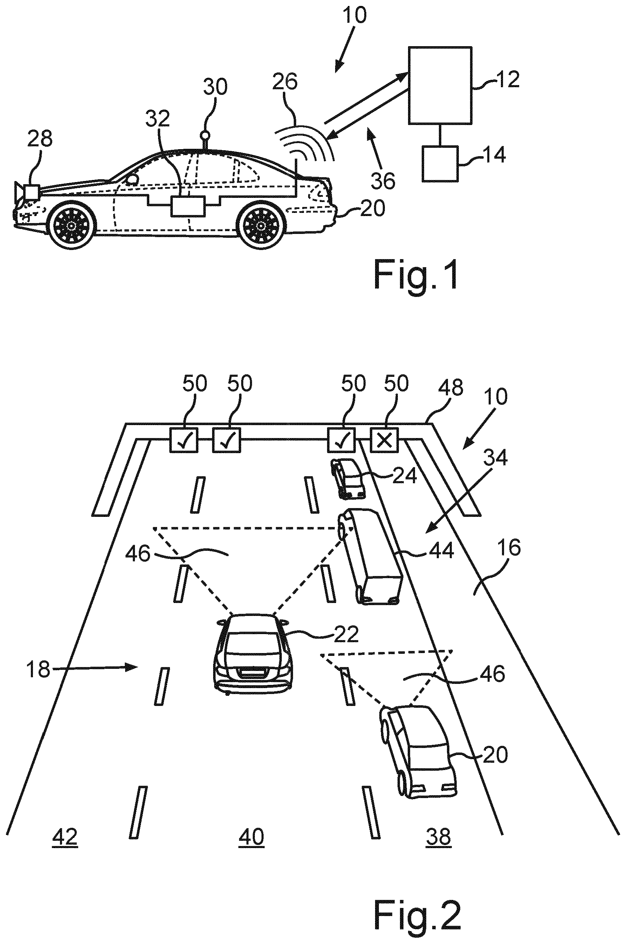

Fig. 1 zeigt eine schematische Seitenansicht einer Ausführungsform eines Überwachungssystems 10. Das Überwachungssystem 10 weist eine kraftfahrzeugexterne, zentrale elektronische Recheneinrichtung 12 auf. Das Überwachungssystem 10 ist zum Erzeugen einer Freigabe 40 für die Nutzung eines Seitenstreifens 16 (Fig. 2) einer Straße 18 (Fig. 2) für Kraftfahrzeuge 20, 22, 24, 44 (Fig. 2) ausgebildet.

Fig. 1 zeigt insbesondere ein erstes Kraftfahrzeug 20. Das erste Kraftfahrzeug 20 weist eine Kommunikationseinrichtung 26 auf, wodurch das erste Kraftfahrzeug 20 mit der kraftfahrzeugexternen, zentralen elektronischen Recheneinrichtung 12 kommunizieren kann. Die kraftfahrzeugexterne, zentrale elektronische Recheneinrichtung 12 kann auch als Backend bezeichnet werden.

Das erste Kraftfahrzeug 20 weist vorliegend zwei Erfassungseinrichtungen 28, 30 auf. Eine erste Erfassungseinrichtung 28 kann als Kamera ausgebildet sein und eine zweite Erfassungseinrichtung 30 kann beispielsweise als Lidar-Sensor ausgebildet sein. Diese Aufzählung ist rein beispielhaft und keinesfalls als abschließend zu betrachten. Es sind ferner auch weitere Erfassungseinrichtungen 28, 30 möglich, wie beispielsweise ein Ultraschallsensor oder ein Radarsensor. Das erste Kraftfahrzeug 20 weist vorliegend eine Fusionseinrichtung 32 auf. Mittels der Fusionseinrichtung 32 kann eine Sensorfusion durchgeführt werden. Hierbei kann insbesondere eine Teilinterpretation für einen Belegungszustand 34 (Fig. 2) oder eine Vollinterpretation des Belegungszustands 34 durchgeführt werden. Ferner werden insbesondere Informationen 36 mit der kraftfahrzeugexternen, elektronischen Recheneinrichtung ausgetauscht. Beispielsweise kann eine Position des ersten Kraftfahrzeugs 20 und/oder ein Zeitpunkt und/oder ein Objekt entsprechend an die kraftfahrzeugexterne, elektronische Recheneinrichtung 12 übertragen werden. Ferner können auch Livebilder beziehungsweise -videos zu einem Zeitpunkt an einem speziellen Ort übertragen werden. Ferner kann eine Freigabe des Seitenstreifens an Position X zu einem Zeitpunkt Y als Vorschlag an die kraftfahrzeugexterne, zentrale elektronische Recheneinrichtung 12 übertragen werden.

Von der kraftfahrzeugexternen elektronischen Recheneinrichtung 12 kann wiederum beispielsweise ein sogenannter Geofence Informationen an das erste Kraftfahrzeug 20 übertragen werden. Im folgenden Ausführungsbeispiel ist lediglich das erste Kraftfahrzeug 20 gezeigt. Das gleiche Verfahren beziehungsweise. die gleichen Merkmale können auch für das zweite Kraftfahrzeug 22 sowie das dritte Kraftfahrzeug 24 gemäß Fig. 2 ausgeführt werden.

Beim Verfahren zum Erzeugen der Freigabe 14 für die Nutzung des Seitenstreifens 16 auf der Straße 18 für Kraftfahrzeuge 20, 22, 24 mittels des Überwachungssystems 10 wird mittels zumindest einer Erfassungseinrichtung 28, 30 der Seitenstreifen 16 erfasst und in Abhängigkeit von der Erfassung wird der Belegungszustand 34 des Seitenstreifens 16 ermittelt und in Abhängigkeit von dem Belegungszustand 34 und in Abhängigkeit von einem Entscheidungskriterium wird die Freigabe 14 zur Nutzung des Seitenstreifens 16 mittels der kraftfahrzeugexternen, zentralen elektronischen Recheneinrichtung 12 des Überwachungssystems 10 erzeugt.

Es ist dabei vorgesehen, dass mittels zumindest der Erfassungseinrichtung 28, 30 eines Kraftfahrzeugs 20, 22, 24, welches auf der Straße 18 fährt, der Seitenstreifen 16 erfasst wird und der erfasste Seitenstreifen 16 zur Auswertung an die zentrale elektronische Recheneinrichtung 12 übertragen wird und der Belegungszustand 34 bezüglich eines dynamischen Objekts auf dem Seitenstreifen 16 ermittelt wird.

Fig. 2 zeigt eine schematische Perspektivansicht einer Ausführungsform des Überwachungssystems 10. Insbesondere ist vorliegend gezeigt, dass die Straße 18 einen ersten Fahrstreifen 38, einen zweiten Fahrstreifen 40 sowie einen dritten Fahrstreifen 42 aufweisen kann. Das erste Kraftfahrzeug 20 befindet sich vorliegend auf dem ersten Fahrstreifen 38. Das zweite Kraftfahrzeug 22 befindet sich auf dem daneben liegenden zweiten Fahrstreifen 40. Das dritte Kraftfahrzeug 24 befindet sich vor dem ersten Kraftfahrzeug 20 auf dem ersten Fahrstreifen 38. Zwischen dem ersten Kraftfahrzeug 20 und dem dritten Kraftfahrzeug 24 ist ein Lastkraftwagen 44 gezeigt. Ferner ist insbesondere gezeigt, dass zumindest das erste Kraftfahrzeug 20 und das zweite Kraftfahrzeug 22 einen Erfassungsbereich 46 aufweisen, welcher insbesondere durch die Erfassungseinrichtung 28, 30 erfasst werden können. Der Lastkraftwagen 44 befindet sich insbesondere im Erfassungsbereich 46 des zweiten Kraftfahrzeugs 22. Insbesondere kann somit eine Erfassung des Seitenstreifens 16 durch das zweite Kraftfahrzeug 22 vorliegend nicht durchgeführt werden. Der Seitenstreifen 16 wird vorliegend lediglich durch das erste Kraftfahrzeug 22 und das dritte Kraftfahrzeug 24 erfasst.

Ferner zeigt die Fig. 2, dass das Überwachungssystem 10 ein Verkehrsleitsystem 48 aufweisen kann. Vorwiegend weist das Verkehrsleitsystem 48 vier optische Anzeigen 50 auf, welche insbesondere einem jeweiligen Fahrstreifen 38, 40, 42 und dem Seitenstreifen 16 zugeordnet sind. Vorliegend erfolgt keine Freigabe 14 des Seitenstreifens 16, was insbesondere durch ein X auf der korrespondierenden Anzeige 50 angezeigt ist.

Insbesondere ist somit gezeigt, dass mittels einer Vielzahl von Erfassungseinrichtungen 28, 30 von einer Vielzahl von Kraftfahrzeugen 20, 22, 24 der Seitenstreifen 16 erfasst wird. Mittels der Vielzahl von Erfassungseinrichtung 28, 30 kann der ermittelte Belegungszustand 34 mittels der zentralen elektronischen Recheneinrichtung 12 verifiziert werden.

Ferner kann vorgesehen sein, dass ein aktuelles Verkehrsaufkommen als Entscheidungskriterium bei der Freigabe 14 des Seitenstreifens 16 berücksichtigt wird. Beispielsweise kann der Seitenstreifen 16 erst dann freigegeben werden, wenn beispielsweise ein erhöhtes Verkehrsaufkommen zu verzeichnen ist.

Der Seitenstreifen 16 kann insbesondere lediglich für einen vorgegebenen Abschnitt des Seitenstreifens 16 und/oder für eine vorgegebene Zeit mittels der zumindest einen Erfassungseinrichtung 28, 30 erfasst werden. Die Freigabe 14 des Seitenstreifens 16 kann insbesondere automatisiert an das Verkehrsleitsystem 48 des Überwachungssystems 10 übertragen werden.

Insbesondere ist somit in der Fig. 2 gezeigt, dass die Kraftfahrzeuge 22, 24, 26 mit verschiedenen Erfassungseinrichtungen 28, 30 zur Erfassung des Umfelds ausgerüstet sein können, wobei diese dann wiederum ihr Umfeld selbst interpretieren beziehungsweise klassifizieren. Somit kann auf Basis der Fusion der entsprechenden Sensordaten ein Objekttyp-/Orts-, Zustands- und Zeitbezug für dynamische Objekte, welche beispielsweise Menschen, Gegenstände oder weitere Kraftfahrzeuge sein können, getroffen werden. Es ist also bekannt, ob sich ein dynamisches Objekt auf dem Seitenstreifen 16 bewegt oder steht. Die Kraftfahrzeuge 20, 22, 24 schicken über ihr Kommunikationsmodul wiederum die erfassten Objekte mit beispielsweise Metainformationen und Live-Umgebungsbildern an die kraftfahrzeugexterne, zentrale elektronische Recheneinrichtung 12 beziehungsweise direkt an einen Nutzer des Überwachungssystems 10. Innerhalb der kraftfahrzeugexternen, zentralen elektronischen Recheneinrichtung 12 werden dann die Daten von verschiedenen Kraftfahrzeugen 20, 22, 24 auf einen identischen Streckenabschnitt in einem definierten Zeitraum fusioniert. Somit kann eine durch andere Kraftfahrzeuge 20, 22, 24 oder Lastkraftwagen 44 belegte Straße 18 beziehungsweise ein Blenden der Sonne und eine überdeckte Sicht auf den Seitenstreifen 16 kompensiert werden. Zudem werden die einzelnen Live-Umgebungsbilder zusammengesetzt um eine freie Sicht auf den Seitenstreifen 16 zu ermöglichen für eine etwaige manuelle Überprüfung beziehungsweise eine Beweisführung.

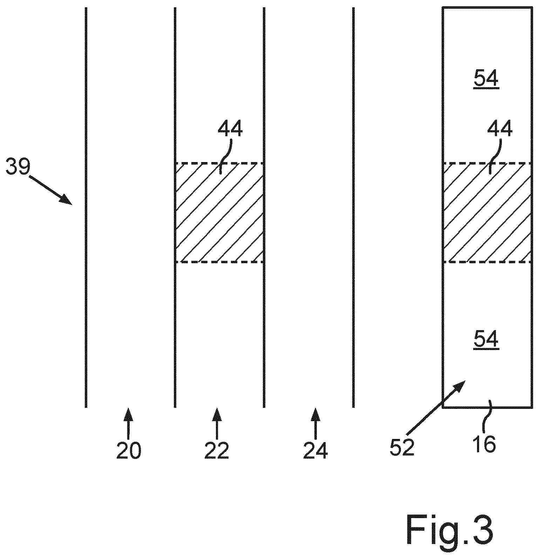

Durch die mehrfache Überfahrt unterschiedlicher Kraftfahrzeuge 20, 22, 24 innerhalb eines definierten Zeitintervalls innerhalb eines definierten Abschnitts kann die Zuverlässigkeit der Freigabe erhöht und der erforderliche Konfidenzlevel, mit anderen Worten eine Vertrauensgüte 52 (Fig. 3), spezifisch definiert werden. Falls das Kraftfahrzeug 20, 22, 24 die Objekt auf dem Seitenstreifen 16 nicht ausreichend klassifizieren kann, ist auch eine Onlineauswertung mittels Bilderkennungsalgorithmen in der kraftfahrzeugexternen, zentralen elektronischen Recheneinrichtung 12 möglich. Die Objektklassifikation ermöglicht auch eine Anonymisierung, da die Bilddaten nicht zwingend erforderlich sind und nur die Information über eine belegte oder nicht belegte Spur ausgegeben werden. Die Datenmenge kann reduziert werden, indem sogenannte Kampanien erstellt werden, sodass nur in Regionen mit einem dynamischen freizugebenden Seitenstreifen 16 die Daten gesammelt und an die kraftfahrzeugexterne, zentrale elektronische Recheneinrichtung 12 weitergeschickt werden.

Fig. 3 zeigt eine schematische Ansicht zur Auswertung des Belegungszustands 34. Insbesondere kann der Seitenstreifen 16 vom ersten Kraftfahrzeug 20 durchgehend erfasst werden. Durch das zweite Kraftfahrzeug 22 kann insbesondere der Seitenstreifen 16 im Bereich des Lastkraftwagens 44 nicht ausreichend überwacht werden. Vom dritten Kraftfahrzeug 24 kann ebenfalls der Seitenstreifen 16 durchgehend überwacht werden.

Die Vertrauensgüte 52 ist dann auf der rechten Seite angezeigt. Insbesondere im Bereich des Lastkraftwagens 44 kann dann die Vertrauensgüte 52 entsprechend niedriger sein, da hier vom zweiten Kraftfahrzeug 22 nicht ausreichend Informationen zur Verfügung gestellt werden. Insbesondere kann die Freigabe 14 erst dann erfolgen, wenn eine erhöhte Vertrauensgüte 52, wie dies beispielsweise außerhalb der Bereiche des Lastkraftwagens 44 gezeigt ist, aufzufinden ist. Es ist somit vorgesehen, dass in Abhängigkeit von der Erfassung des Seitenstreifens 16 die Vertrauensgüte 52 für den Belegungszustand 34 mittels der zentralen elektronischen Recheneinrichtung 12 erzeugt wird und in Abhängigkeit von der Vertrauensgüte 52 die Freigabe 14 mittels der zentralen elektronischen Recheneinrichtung 12 erzeugt wird.

In einem Bereich 54 bei der Vertrauensgüte 52 kann somit eine komplette Freigabe 14 für den Seitenstreifen 16 erfolgen. Im Bereich des Lastkraftwagens 44 kann dann wiederum lediglich eine mittlere Vertrauensgüte 52 bereitgestellt werden, sodass für diesen Bereich keine Freigabe 14 erfolgen kann. Insbesondere kann dann in Abhängigkeit einer vordefinierten Länge des Seitenstreifens 16 erst die direkte Freigabe 14 erfolgen. Sollte beispielsweise für eine Streckenlänge von 5 km keine Belegung des Seitenstreifens 16 identifiziert werden, so kann dieser Seitenstreifen 16 dann erst freigegeben werden. Sollte eine Belegung beziehungsweise eine zu niedrige Vertrauensgüte 52 vorliegen, so kann der Seitenstreifen 16 nicht freigegeben werden.

Insgesamt zeigen die Figuren ein Verfahren zur Seitenstreifenüberwachung anhand von Fahrzeugdaten zur dynamischen Seitenstreifenfreigabe.

## Patentansprüche

1. Verfahren zum Erzeugen einer Freigabe (14) für eine Nutzung eines Seitenstreifens (16) einer Straße (18) für Kraftfahrzeuge (20, 22, 24,44) mittels eines Überwachungssystems (10), bei welchem mittels zumindest einer Erfassungseinrichtung (28, 30) der Seitenstreifen (16) erfasst wird und in Abhängigkeit von der Erfassung ein Belegungszustand (34) des Seitenstreifens (16) ermittelt wird und in Abhängigkeit von dem Belegungszustand (34) und in Abhängigkeit von einem Entscheidungskriterium die Freigabe (14) zur Nutzung des Seitenstreifens (16) mittels einer kraftfahrzeugexternen, zentralen elektronischen Recheneinrichtung (12) des Überwachungssystems (10) erzeugt wird, **dadurch gekennzeichnet, dass**
mittels der zumindest einen Erfassungseinrichtung in Form einer Kamera oder eines Radar-, Lidar- oder Ultraschallsensors (28, 30) von einer Vielzahl von Kraftfahrzeugen (20, 22, 24), welche auf der Straße (18) fahren, der Seitenstreifen (16) erfasst wird und die erfassten Daten zur Fusionierung und zur Auswertung an die kraftfahrzeugexterne, zentrale elektronische Recheneinrichtung (12) übertragen werden und der Belegungszustand (34) bezüglich zumindest eines dynamischen Objekts auf dem Seitenstreifen (16) mittels der kraftfahrzeugexternen, zentralen elektronischen Recheneinrichtung (12) ermittelt wird, und die Freigabe (14) über ein Car-to-X oder eine andere Kommunikationskette die entsprechenden Verkehrsteilnehmer geschickt wird.

2. Verfahren nach Anspruch 1, wobei mittels der Vielzahl von Erfassungseinrichtungen (28, 30) der ermittelte Belegungszustand (34) mittels der zentralen elektronischen Recheneinrichtung verifiziert (12) wird.

3. Verfahren nach einem der vorhergehenden Ansprüche, wobei ein aktuelles Verkehrsaufkommen als Entscheidungskriterium bei der Freigabe (14) des Seitenstreifens (16) berücksichtigt wird.

4. Verfahren nach einem der vorhergehenden Ansprüche, wobei der Seitenstreifen (16) für einen vorgegebenen Abschnitt des Seitenstreifens (16) und/oder für eine vorgegebene Zeit mittels der zumindest einen Erfassungseinrichtung (28, 30) erfasst wird.

5. Verfahren nach einem der vorhergehenden Ansprüche, wobei die Freigabe (14) des Seitenstreifens (16) automatisiert an ein Verkehrsleitsystem (48) des Überwachungssystems (10) übertragen wird.

6. Verfahren nach einem der vorhergehenden Ansprüche, wobei in Abhängigkeit von der Erfassung des Seitenstreifens (16) eine Vertrauensgüte (52) für den Belegungszustand (34) mittels der zentralen elektronischen Recheneinrichtung (12) erzeugt wird und in Abhängigkeit von der Vertrauensgüte (52) die Freigabe (14) mittels der zentralen elektronischen Recheneinrichtung (12) erzeugt wird.

7. Verfahren nach einem der vorhergehenden Ansprüche, wobei, wenn die zumindest eine Erfassungseinrichtung in Form einer Kamera ausgebildet ist, mittels einer Bilderkennung innerhalb der zentralen elektronischen Recheneinrichtung (12) der Belegungszustand (34) des Seitenstreifens (16) ermittelt wird.

8. Verfahren nach einem der vorhergehenden Ansprüche, wobei die Erzeugung der Freigabe (14) in Echtzeit durchgeführt wird.

9. Überwachungssystem (10) zum Erzeugen einer Freigabe (14) für eine Nutzung eines Seitenstreifens (16) einer Straße (18) für Kraftfahrzeuge (20, 22, 24,44), mit zumindest einer kraftfahrzeugexternen, zentralen elektronischen Recheneinrichtung (12), wobei das Überwachungssystem (10) zum Durchführen eines Verfahrens nach einem der Ansprüche 1 bis 8 ausgebildet ist

## Claims

1. Method for generating authorization (14) for the use of a hard shoulder (16) of a road (18) for motor vehicles (20, 22, 24, 44) by means of a monitoring system (10), in which the hard shoulder (16) is captured by means of at least one capturing device (28, 30) and, depending on the capturing, an occupancy state (34) of the hard shoulder (16) is determined and, depending on the occupancy state (34) and depending on a decision criterion, the authorization (14) for the use of the hard shoulder (16) is generated by means of a central electronic computing device (12) of the monitoring system (10) external to the motor vehicle,
**characterized in that,**
by means of the at least one capturing device in the form of a camera or a radar, lidar or ultrasonic sensor (28, 30) of a plurality of motor vehicles (20, 22, 24) which are driving on the road (18), the hard shoulder (16) is captured and the captured data is transmitted to the central electronic computing device (12) external to the motor vehicle for fusion and evaluation and the occupancy state (34) with respect to at least one dynamic object on the hard shoulder (16) is determined by means of the central electronic computing device (12) external to the motor vehicle, and the authorization (14) is sent to the corresponding road users via a Car-to-X or another communication chain.

2. Method according to claim 1,
wherein,
by means of the plurality of capturing devices (28, 30), the determined occupancy state (34) is verified (12) by means of the central electronic computing device.

3. Method according to any of the preceding claims,
wherein
a current traffic volume is taken into account as a decision criterion during the authorization (14) of the hard shoulder (16).

4. Method according to any of the preceding claims,
wherein
the hard shoulder (16) is captured for a predetermined portion of the hard shoulder (16) and/or for a predetermined time by means of the at least one capturing device (28, 30).

5. Method according to any of the preceding claims,
wherein
the authorization (14) of the hard shoulder (16) is automatically transmitted to a traffic control system (48) of the monitoring system (10).

6. Method according to any of the preceding claims,
wherein,
depending on the capturing of the hard shoulder (16), a confidence level (52) for the occupancy state (34) is generated by means of the central electronic computing device (12), and, depending on the confidence level (52), the authorization (14) is generated by means of the central electronic computing device (12).

7. Method according to any of the preceding claims,
wherein, if the at least one capturing device is in the form of a camera,
the occupancy state (34) of the hard shoulder (16) is determined by means of image recognition within the central electronic computing device (12).

8. Method according to any of the preceding claims,
wherein
the authorization (14) is generated in real time.

9. Monitoring system (10) for generating authorization (14) for the use of a hard shoulder (16) of a road (18) for motor vehicles (20, 22, 24, 44), comprising at least one central electronic computing device (12) external to the motor vehicle, wherein the monitoring system (10) is designed to carry out a method according to any of claims 1 to 8.

## Revendications

1. Procédé de génération d'une autorisation (14) pour une utilisation d'une bande d'arrêt d'urgence (16) d'une route (18) pour des véhicules automobiles (20, 22, 24, 44) par le biais d'un système de surveillance (10), dans lequel, par le biais d'au moins un dispositif de détection (28, 30), la bande d'arrêt d'urgence (16) est détectée et, en fonction de la détection, un état d'occupation (34) de la bande d'arrêt d'urgence (16) est déterminé et, en fonction de l'état d'occupation (34) et en fonction d'un critère de décision, l'autorisation (14) d'utiliser la bande d'arrêt d'urgence (16) est générée par le biais d'un dispositif de calcul électronique central (12), extérieur au véhicule automobile, du système de surveillance (10),
**caractérisé en ce que**
par le biais d'au moins un dispositif de détection sous la forme d'une caméra ou d'un capteur radar, lidar ou à ultrasons (28, 30), la bande d'arrêt d'urgence (16) est détectée par une pluralité de véhicules automobiles (20, 22, 24) qui circulent sur la route (18) et les données détectées sont transmises pour fusion et évaluation au dispositif de calcul électronique central (12) externe au véhicule et l'état d'occupation (34) concernant au moins un objet dynamique sur la bande d'arrêt d'urgence (16) est déterminé par le biais du dispositif de calcul électronique central (12) externe au véhicule, et l'autorisation (14) est envoyée aux usagers de la route correspondants par l'intermédiaire d'un véhicule-à-tout ou d'une autre chaîne de communication.

2. Procédé selon la revendication 1,
dans lequel
par le biais de la pluralité de dispositifs de détection (28, 30), l'état d'occupation (34) déterminé est vérifié (12) au moyen du dispositif de calcul électronique central.

3. Procédé selon l'une des revendications précédentes,
dans lequel
un volume de trafic actuel est pris en compte comme critère de décision lors de l'autorisation (14) de la bande d'arrêt d'urgence (16).

4. Procédé selon l'une des revendications précédentes,
dans lequel
la bande d'arrêt d'urgence (16) est détectée pour une section prédéfinie de la bande d'arrêt d'urgence (16) et/ou pour un temps prédéfini par le biais de l'au moins un dispositif de détection (28, 30).

5. Procédé selon l'une des revendications précédentes,
dans lequel
l'autorisation (14) de la bande d'arrêt d'urgence (16) est transmise de manière automatisée à un système de gestion de trafic (48) du système de surveillance (10).

6. Procédé selon l'une des revendications précédentes,
dans lequel
en fonction de la détection de la bande d'arrêt d'urgence (16), une qualité de confiance (52) est générée pour l'état d'occupation (34) par le biais du dispositif de calcul électronique central (12) et, en fonction de la qualité de confiance (52), l'autorisation (14) est générée par le biais du dispositif de calcul électronique central (12).

7. Procédé selon l'une des revendications précédentes,
dans lequel, lorsque l'au moins un dispositif de détection est conçu sous la forme d'une caméra,
l'état d'occupation (34) de la bande d'arrêt d'urgence (16) est déterminé par le biais d'une reconnaissance d'image à l'intérieur du dispositif de calcul électronique central (12).

8. Procédé selon l'une des revendications précédentes,
dans lequel
la génération de l'autorisation (14) est réalisée en temps réel.

9. Système de surveillance (10) permettant de générer une autorisation (14) pour une utilisation d'une bande d'arrêt d'urgence (16) d'une route (18) pour des véhicules automobiles (20, 22, 24, 44), comportant au moins un dispositif de calcul électronique central (12) externe au véhicule automobile, dans lequel le système de surveillance (10) est conçu pour réaliser un procédé selon l'une des revendications 1 à 8
